# FASCICULE DE BREVET EUROPEEN

(11) **EP 0 397 544 B1**
(45) Date de publication et mention de la délivrance du brevet: **09.02.1994**
(21) Numéro de dépôt: 90401181.4
(22) Date de dépôt: 30.04.1990
(51) Int. Cl.: B60K 5/10, B62D 21/12

(54) **Structure avant pour véhicule automobile et véhicule équipé de cette structure**
Frontstruktur für ein Kraftfahrzeug und mit dieser Struktur ausgerüstetes Fahrzeug
Front structure for an automotive vehicle and vehicle provided with this structure

(30) Priorité: 10.05.1989 FR 8906127
(43) Date de publication de la demande: 14.11.1990
(73) Titulaire: AUTOMOBILES PEUGEOT, 75116 Paris (FR); AUTOMOBILES CITROEN, 92200 Neuilly-sur-Seine (FR)
(72) Inventeur: Nicolas, Jean, F-92110 Clichy (FR)
(74) Mandataire: Durand, Yves Armand Louis

(56) Documents cités:
- DE-A- 1 680 029
- DE-A- 3 522 447
- FR-A- 2 624 068
- GB-A- 2 090 795
- GB-A- 2 151 193
- US-A- 2 636 774

## Description

La présente invention a essentiellement pour objet une structure avant pour véhicule automobile quelconque.

Elle vise également un véhicule équipé de cette structure.

On sait que la partie avant d'un véhicule automobile forme un ensemble mécanique comprenant le moteur, son berceau, les liaisons au sol, la transmission, la direction etc... ,

Cet ensemble mécanique est en quelque sorte coiffé par une caisse qui peut comporter des brancards maintenus à leur extrémité avant par un cadre soudé sur lequel sont fixés des éléments de façade du véhicule et tels que notamment les projecteurs, le bouclier, la calandre, le radiateur avec son ventilateur etc... . Or, au cours de la vie du véhicule, il peut être souhaitable de pouvoir extraire du véhicule une partie de la mécanique, et notamment le groupe moto-propulseur, pour pouvoir procéder à une remise en état dudit véhicule.

Autrement dit, il convient, dans ce cas, de sortir la mécanique par le dessous, par le dessus ou par l'avant du véhicule.

L'extraction de la mécanique par le dessous du véhicule présente de grosses difficultés et est coûteuse, car non seulement le véhicule doit être soulevé par un pont, mais il doit présenter un passage assez important pour que la mécanique puisse être extraite, ce qui n'est pas toujours le cas.

L'extraction de la mécanique par le dessus du véhicule nécessite l'utilisation d'un moyen de levage, mais elle n'est pas possible dans tous les cas, car les dimensions du capot, l'encombrement du groupe moto-propulseur et la fixation de celui-ci empêchent souvent une telle extraction.

Enfin, une extraction de la mécanique ou du groupe moto-propulseur vers l'avant n'est pas possible en raison du fait que, dans les structures classiques, le cadre est soudé sur les extrémités avant des brancards.

On connait d'après le document DE-A-3 552 447 une structure avant de véhicule automobile du type décrit dans le préambule de la revendication 1.

Par ailleurs, dans le document DE-A-1 680 029, il est décrit un dispositif d'absorption des chocs prévu sur la partie avant d'un véhicule qui ne comporte pas de berceau associé à des brancards et qui ne comporte pas d'éléments de façade montés sur le cadre.

La présente invention a pour but de remédier à tous les inconvénients ci-dessus en proposant une structure avant de véhicule qui permet l'extraction par l'avant de la mécanique, c'est-à-dire du groupe moto-propulseur par exemple, et cela grâce à une opération simple de désolidarisation du cadre de la structure avant.

On observera en outre que la mécanique, en raison de son extraction par l'avant du véhicule, peut être immédiatement et facilement déposée et transportée sur un simple chariot roulant sur le sol.

A cet effet, l'invention a pour objet une structure avant de véhicule automobile comprenant deux brancards associés à un berceau et un cadre qui est fixé de façon détachable à l'avant du véhicule et sur lequel sont montés tous les éléments de façade du véhicule, caractérisée en ce que ledit cadre est fixé de façon détachable sur les extrémités avant des brancards, et est aussi fixé de façon détachable et/ou articulée sur le berceau suivant un axe s'étendant transversalement à la direction longitudinale du véhicule.

Suivant encore une autre caractéristique préférée de l'invention, la fixation amovible et/ou articulée du cadre sur le berceau est effectuée entre deux jambes de force appartenant au cadre et ledit berceau, ou bien entre des longerons appartenant au berceau et ledit cadre.

La fixation du cadre sur les brancards et sur le berceau est, suivant un exemple de réalisation préféré, effectuée par l'intermédiaire d'un moyen formant chape traversé par un axe, tel que par exemple un boulon.

Le moyen formant chape peut être constitué par deux goussets avec orifices solidaires des extrémités avant des brancards et du berceau et entre lesquels s'encastrent des parties du cadre précité.

Suivant encore une autre caractéristique préférée de l'invention, la façade avant du véhicule comprend un bouclier qui est monté pivotant sur le cadre précité, ce qui permet de dégager le bouclier avant de faire pivoter le cadre avec ses éléments de façade pour pouvoir extraire la mécanique par l'avant et/ou le dessus du véhicule.

Mais d'autres avantages et caractéristiques de l'invention apparaîtront mieux dans la description détaillée qui suit et se réfère aux dessins annexés donnés uniquement à titre d'exemple, et dans lesquels :
- la figure 1 illustre en coupe verticale une structure avant conforme à l'invention pour véhicule à capot relativement court et à brancards hauts ;
- la figure 2 est une vue similaire à la figure 1 et montre un autre mode de réalisation de cette structure avant ;
- la figure 3 est une vue partielle et en perspective illustrant les moyens de fixation amovible du cadre sur l'extrémité avant des brancards ;
- la figure 4 est une vue similaire à la figure 4 mais montrant les moyens de fixation amovible et/ou articulée des jambes de force du cadre sur les longerons du berceau, dans le cas de la réalisation de la figure 1 ;
- la figure 5 est une demi-vue en perspective de la structure avant conforme à l'invention, le cadre étant représenté en position montée et les éléments de façade montés sur ce cadre étant représentés à côté du cadre pour plus de clarté ; et
- la figure 6 illustre schématiquement et en coupe verticale comment s'effectue le pivotement du bouclier par rapport au cadre, et du cadre par rapport à la caisse pour permettre l'extraction de la mécanique par l'avant et/ou le dessus du véhicule.

En se reportant aux figures, on voit qu'une structure avant de véhicule selon cette invention comprend essentiellement deux brancards 1 sensiblement parallèles et associés à un berceau 2 recevant notamment un groupe moto-propulseur non représenté.

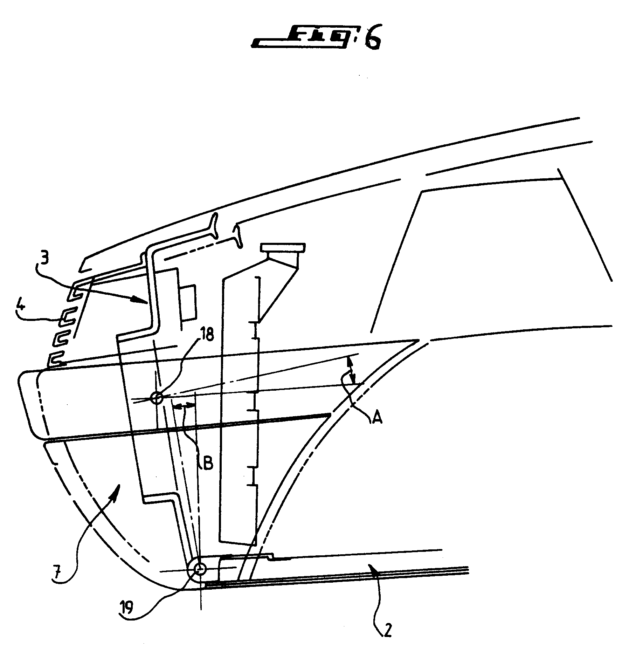

Les brancards 1 sont maintenus par un cadre 3 qui est bien visible sur la figure 5.

Sur cette figure, on voit également que tous les éléments constituant la façade du véhicule et comprenant notamment une calandre 4, un radiateur vertical 5, des ventilateurs 6 et un bouclier 7 avec grille d'entrée d'air sont fixés sur le cadre 3.

Ce cadre 3 est, conformément à l'invention, fixé de façon détachable sur notamment les extrémités avant 1a des brancards 1 comme cela sera expliqué ci-après dans la description des divers modes de réalisation de structure avant selon cette invention.

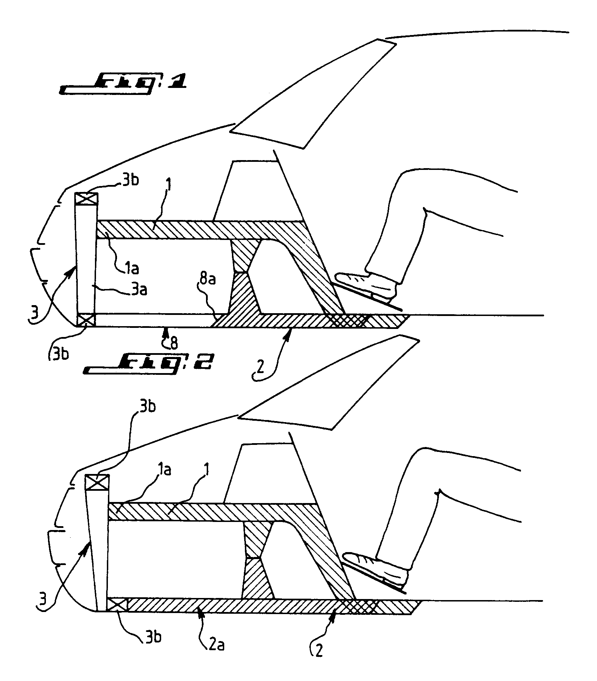

Pour un véhicule à capot relativement court, et comme on le voit bien sur les figures 1 et 5, le cadre 3 est constitué d'une façade comportant deux montants verticaux 3a, deux traverses 3b, et deux jambes de force 8 qui sont solidaires de l'une des deux traverses 3b du cadre 3, à savoir la traverse inférieure.

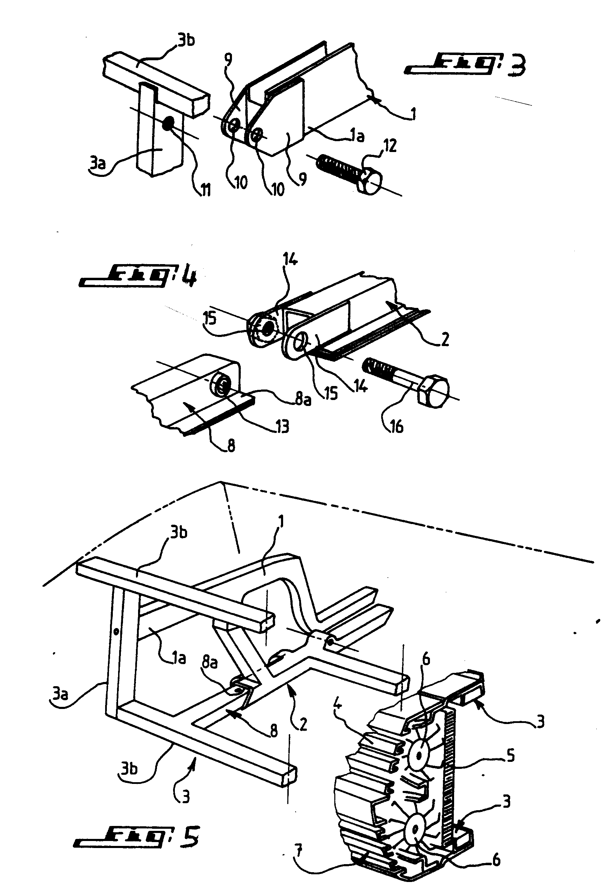

Les montants verticaux 3a du cadre 3 sont fixés de façon détachable sur les extrémités avant 1a des brancards 1 à l'aide par exemple des moyens illustrés sur la figure 3.

Ces moyens comportent deux goussets 9 avec orifices 10 solidaires des extrémités avant 1a des brancards 1 et formant en quelque sorte une chape dans laquelle peut s'encastrer le montant vertical 3a du cadre 3.

Plus précisément, les montants verticaux 3a du cadre 3 comportent des trous 11, de manière qu'après encastrement des montants verticaux 3a dans les chapes, un axe, tel que par exemple une vis ou un boulon 12, puisse traverser les orifices 10 et 11 pour ainsi assurer la liaison amovible du cadre 3 aux brancards 1.

Quant à l'extrémité 8a des jambes de force 8 du cadre 3, et comme on le voit bien sur la figure 4, elle est aussi encastrée dans un élément formant chape prévu à l'extrémité des longerons du berceau 2 qui, comme connu en soi, est solidaire des brancards 1.

Plus précisément, on voit sur la figure 4 que, comme dans le cas de la figure 3, l'extrémité 8a des jambes de force 8 comporte un orifice 13, tandis que l'extrémité des longerons du berceau 2 comporte des goussets 14 avec orifices 15 définissant une chape, étant entendu qu'un axe tel que par exemple un boulon 16 traversant les orifices 15 et 13 assure la liaison amovible et/ou pivotante du cadre 3 sur le berceau 2.

On comprend donc que pour extraire par exemple le groupe moto-propulseur du véhicule, il suffit tout simplement de détacher le cadre 3 des extrémités la du brancard 1, c'est-à-dire de démonter l'assemblage visible sur 1a figure 3, puis on fait pivoter le cadre 3 vers le bas autour de l'axe 16 visible sur la figure 4, étant entendu que cet axe peut, si on le désire, être démonté, ce qui permet de démonter complètement le cadre initialement solidaire des brancards 1 et du berceau 2. Ainsi, que le cadre 3 avec tous ses éléments de façade ait été simplement basculé ou complètement démonté, on peut facilement extraire le groupe moto-propulseur par l'avant du véhicule, ce groupe pouvant être tout simplement reçu sur un cric rouleur, de sorte que toutes les exigences de sécurité et de temps minimum de main d'oeuvre sont satisfaites.

Le mode de réalisation représenté sur la figure 2 diffère seulement de celui des figures 1 et 5 par le fait que les jambes de force 8 solidaires du cadre 3 sont ici omises. Plus précisément, le berceau 2 est ici en quelque sorte prolongé vers l'avant du véhicule par un longeron 2a dont l'extrémité est fixée au cadre 3 de façon amovible et/ou pivotante comme expliqué précédemment à propos de la figure 4.

En se reportant à la figure 6, on voit que le bouclier 7 est monté articulé ou pivotant en 18 sur le cadre 3, lequel, comme expliqué précédemment, est monté pivotant en 19 sur le berceau 2.

Sur cette figure, le cadre 3 et le bouclier 7 en position montée sont représentés en traits mixtes, tandis que les positions basculées de ces deux éléments sont représentées en traits pleins.

Il faut observer que si l'on basculait le cadre 3 autour du point 19, le bouclier 7 solidaire de ce cadre buterait sur les ailes de la carrosserie. Aussi, avant basculement du cadre 3, ou simultanément on fait pivoter le bouclier 7 par rapport audit cadre, ce qui permet le dégagement du bouclier, et, après cela, on peut, sans problème, effectuer le basculement du cadre 3 vers le bas pour pouvoir procéder à l'extraction du groupe moto-propulseur par exemple, par l'avant du véhicule. On a montré en A et B respectivement les angles de déplacement ou de basculement du bouclier 7 par rapport au cadre 3, et du cadre 3 avec tous ses éléments de façade par rapport à la structure de caisse.

Le mode de réalisation de la figure 6 ne sert pas uniquement à extraire le groupe moto-propulseur par l'avant du véhicule. Un basculement d'un angle B relativement faible peut suffire pour permettre l'accessibilité à un organe qui, sans cela, pourrait être difficile à atteindre, comme le radiateur par exemple, ou donner suffisamment d'espace pour extraire certains organes (y compris le groupe moto-propulseur) par le dessus. Et on peut pour cela utiliser un appareil de levage simple tel qu'une chèvre.

On a donc réalisé suivant l'invention une structure avant de véhicule permettant une grande accessibilité à la mécanique et permettant d'extraire cette mécanique avec un appareil simple tel que par exemple une chèvre ou un cric rouleur, et cela même lorsque le groupe moto-propulseur est fixé sous les brancards.

On observera encore que dans la réalisation des figures 1 et 5 (véhicules à capot relativement court), on peut avantageusement utiliser un seul type de berceau, quelle que soit la position des brancards. Ceci permet de nombreuses possibilités d'interchangeabilité d'un type de véhicule à un autre, par exemple entre une berline et un utilitaire.

## Revendications

1. Structure avant de véhicule automobile comprenant deux brancards (1) associés à un berceau (2) et un cadre qui est fixé de façon détachable à l'avant du véhicule et sur lequel sont montés tous les éléments de façade du véhicule, caractérisée en ce que ledit cadre (3) est fixé de façon détachable sur les extrémités avant (1a) des brancards (1), et est aussi fixé de façon détachable sur le berceau (2) et/ou articulée sur le berceau (2) suivant un axe s'étendant transversalement à la direction longitudinale du véhicule.

2. Structure selon la revendication 1, caractérisée en ce que la fixation détachable et/ou articulée du cadre sur le berceau est effectuée entre des jambes de force (8) appartenant au cadre (3) et ledit berceau (2) ou bien entre des longerons (2a) appartenant au berceau et ledit cadre.

3. Structure selon la revendication 1 ou 2, caractérisée en ce que la fixation du cadre (3) sur les brancards (1) et sur le berceau (2) est effectuée par l'intermédiaire d'un moyen formant chape traversé par un axe (12, 16), tel que par exemple un boulon.

4. Structure selon la revendication 3, caractérisée en ce que les moyens formant chape sont constitués par deux goussets (9, 14) avec orifices (10, 15) solidaires des extrémités avant (1a) des brancards (1) et du berceau (2) et entre lesquels s'encastrent des parties du cadre (3).

5. Structure selon l'une des revendications 1 à 4, caractérisée en ce qu'elle comprend un bouclier (7) monté pivotant (18) sur le cadre précité (3).

6. Véhicule automobile équipé d'une structure avant suivant l'une des revendications 1 à 5.

## Patentansprüche

1. Vorderaufbau eines Kraftfahrzeugs mit zwei einem Tragsattel (2) zugeordneten Holmen (1) und einem Rahmen, der in lösbarer Weise an dem Vorderteil des Fahrzeugs befestigt ist und an welchem alle Frontelemente des Fahrzeugs angeordnet sind, dadurch gekennzeichnet, dass der besagte Rahmen (3) an den Vorderenden (1a) der Holme (1) in lösbarer Weise befestigt ist und auch in lösbarer Weise an dem Tragsattel (2) und/oder in gelenkiger Weise um eine sich quer zu der Längsrichtung des Fahrzeugs erstreckende Achse an dem Tragsattel (2) befestigt ist.

2. Aufbau nach Anspruch 1, dadurch gekennzeichnet, dass die lösbare und/oder gelenkige Befestigung des Rahmens an dem Tragsattel zwischen zu dem Rahmen (3) gehörenden Streben (8) und dem besagten Tragsattel (2) oder zwischen zu dem Tragsattel gehörenden Längsträger (2a) und dem besagten Rahmen durchgefuhrt wird.

3. Aufbau nach Anspruch 1 oder 2, dadurch gekennzeichnet, dass die Befestigung des Rahmens (3) an den Holmen (1) und an dem Tragsattel (2) über ein durch einen Zapfen (12, 16), wie z.B. einen Bolzen durchsetzes, einen Gabelbügel bildendes Mittel erfolgt.

4. Aufbau nach Anspruch 3, dadurch gekennzeichnet, dass die einen Gabelbügel bildenden Mittel durch zwei mit den Vorderenden (1a) der Holme (1) und des Tragsattels (2) fest befestigte Wangenplatten (9, 14) mit Offnungen (10,15), zwischen welchen sich Teile des Rahmens (3) einfügen, gebildet werden.

5. Aufbau nach einem der Anspruche 1 bis 4, dadurch gekennzeichnet, dass er ein an dem vorgenannten Rahmen (3) schwenkbar angeordnetes (18) Schild (7) aufweist.

6. Mit einem Vorderaufbau gemäss einem der Ansprüche 1 bis 5 ausgerüstetes Kraftfahrzeug.

## Claims

1. Forward structure of an automotive vehicle comprising two side-sills (1) associated with a mounting cradle (2) and a frame which is fastened in a detachable manner to the front of the vehicle and onto which are mounted all the frontage elements of the vehicle, characterized in that the said frame (3) is fastened in a detachable manner onto the front ends (1a) of the side-sills (1) and is also fastened in a detachable manner onto the cradle (2) and/or pivotally connected to the cradle (2) about an axis extending transversely of the longitudinal direction of the vehicle.

2. Structure according to claim 1, characterized in that the detachable and/or pivotally connected fastening of the frame onto the cradle is effected between the braces (8) belonging to the frame (3) and the said cradle (2) or between longitudinal stringers (2a) belonging to the cradle and the said frame.

3. Structure according to claim 1 or 2, characterized in that the fastening of the frame (3) onto the side-sills (1) and onto the cradle (2) is effected through the medium of a clevis-shaped means through which extends a pin (12, 16) such as a bolt for example.

4. Structure according to claim 3, characterized in that the clevis-like means are constituted by two gussets (9, 14) with apertures (10, 15) made fast to the front ends (1a) of the side-sills (1) and of the cradle (2) and between which are fitted portions of the frame (3).

5. Structure according to one of claims 1 to 4, characterized in that it comprises a scuttle (7) pivotally mounted (18) onto the aforesaid frame (3).

6. Automotive vehicle fitted with a forward structure according to one of claims 1 to 5.
